# EUROPÄISCHE PATENTSCHRIFT

(11) **EP 1 205 052 B1**
(45) Veröffentlichungstag und Bekanntmachung des Hinweises auf die Patenterteilung: **28.07.2004**
(21) Anmeldenummer: 00960393.7
(22) Anmeldetag: 04.08.2000
(51) Int. Cl.: H04L 12/40, H04L 1/00

(54) **VERFAHREN ZUR EINSTELLUNG EINER DATENÜBERTRAGUNGSRATE IN EINEM FELDBUSSYSTEM**
METHOD FOR REGULATING DATA TRANSFER RATE IN A FIELD BUS SYSTEM
PROCEDE POUR LE REGLAGE D'UNE VITESSE DE TRANSMISSION DE DONNEES DANS UN SYSTEME A BUS DE TERRAIN

(30) Priorität: 20.08.1999 DE 19939568
(43) Veröffentlichungstag der Anmeldung: 15.05.2002
(73) Patentinhaber: PILZ GmbH & CO., 73760 Ostfildern (DE)
(72) Erfinder: RUPP, Roland, 73110 Hattenhofen (DE); WOHNHAAS, Klaus, 70736 Fellbach (DE); SCHWENKEL, Hans, 70192 Stuttgart (DE)
(74) Vertreter: Lindner, Michael, Dipl.-Ing.
(86) Internationale Anmeldenummer: PCT/EP2000/007583
(87) Internationale Veröffentlichungsnummer: WO 2001/015391

(56) Entgegenhaltungen:
- EP-A- 0 559 214
- US-A- 4 825 362
- US-A- 4 853 850
- US-A- 5 446 846

## Beschreibung

Die vorliegende Erfindung betrifft ein Verfahren zur Einstellung einer Datenübertragungsrate in einem Feldbussystem, das zur Steuerung sicherheitskritischer Prozesse geeignet ist und das zumindest einen an einem Feldbus angeschlossenen Teilnehmer umfaßt. Die Erfindung betrifft ferner ein Feldbussystem zur Steuerung sicherheitskritischer Prozesse, mit einem Feldbus, an dem zumindest ein Teilnehmer angeschlossen ist.

Feldbussysteme der vorgenannten Art werden seit langem in den verschiedensten Gebieten und für unterschiedlichste Zwecke eingesetzt. So ist beispielsweise in der Offenlegungsschrift DE 42 42 936 A1 eine Sicherheitseinrichtung mit Mikroprozessor offenbart, bei der ein Feldbus zur Übertragung von Daten vorgeschlagen wird.

Unter einem Feldbussystem versteht man dabei allgemein ein System zur Datenkommunikation, an das im Idealfall beliebige Teilnehmer angeschlossen werden können, die über den gemeinsamen Feldbus miteinander kommunizieren. Die Kommunikation der Teilnehmer erfolgt auf dem Feldbus anhand von spezifizierten Protokollen. Ein derartiges Kommunikationssystem steht im Gegensatz zu einer individuellen Punkt-zu-Punkt-Kommunikationsverbindung zwischen jeweils zwei Teilnehmern, von deren Kommunikation miteinander andere Teilnehmer vollständig ausgeschlossen sind. Beispiele für bekannte Feldbussysteme sind der sogenannte CAN-Bus, der sogenannte Profibus oder der sogenannte Interbus.

Obwohl die Verwendung von Feldbussen zahlreiche Vorteile vor allem im Hinblick auf den ansonsten erforderlichen, hohen Verkabelungsaufwand besitzt, war deren Verwendung im praktischen Einsatz zur Steuerung von sicherheitskritischen Prozessen bislang nicht möglich. Der Grund hierfür war, daß die Feldbusse angesichts ihrer für beliebige Teilnehmer frei zugänglichen Struktur, die zur Steuerung sicherheitskritischer Prozesse erforderliche Fehlersicherheit nicht gewährleisten konnten. Die Anmelderin hat mittlerweile jedoch ein Feldbussystem entwikkelt, das auch den Anforderungen für sicherheitskritische Prozesse genügt.

Unter einem sicherheitskritischen Prozeß wird vorliegend ein Prozeß verstanden, von dem bei Auftreten eines Fehlers eine nicht zu vernachlässigende Gefahr für Mensch oder auch materielle Güter ausgeht. Bei einem sicherheitskritischen Prozeß muß daher mit im Idealfall hundertprozentiger Sicherheit gewährleistet sein, daß der Prozeß bei Vorliegen eines Fehlers in einen sicheren Zustand überführt wird. Derartige sicherheitskritische Prozesse können auch Teilprozesse von größeren, übergeordneten Gesamtprozessen sein. Beispiele für sicherheitskritische Prozesse sind chemische Verfahren, bei denen kritische Parameter unbedingt in einem vorgegebenen Bereich gehalten werden müssen oder auch komplexe Maschinensteuerungen, wie etwa die einer hydraulischen Presse oder einer gesamten Fertigungsstraße. Bei einer hydraulischen Presse kann beispielsweise die Materialzuführung ein sicherheitsunkritischer Teilprozeß, das Inbetriebnehmen des Preßwerkzeugs demgegenüber ein sicherheitskritischer Teilprozeß im Rahmen des Gesamtprozesses sein. Weitere Beispiele für sicherheitskritische (Teil-)Prozesse sind die Überwachung von Schutzgittern, Schutztüren oder Lichtschranken, die Steuerung von Zwei-Hand-Schaltern oder auch die Reaktion auf Not-Aus-Schalter.

Eine der wichtigsten Forderungen an ein Feldbussystem zur Steuerung sicherheitkritischer Prozesse ist eine definierte und schnelle Reaktionszeit, die bei den bekannten Systemen zur Datenübertragung, beispielsweise über Modem, keine Rolle spielt. Ein solches Feldbussystem muß in der Lage sein, innerhalb einer vorgegebenen definierten Reaktionszeit, beispielsweise nach dem Betätigen eines Not-Aus-Schalters, den Prozeß anzuhalten bzw. zu unterbrechen, um möglichen Schaden zu vermeiden. Die erreichbare Reaktionszeit hängt im wesentlichen von der Übertragungsrate des Feldbussystems ab. Eine hohe Datenübertragungsrate führt zu einer kurzen Reaktionszeit, da die Belastung des Feldbusses im Vergleich zu geringeren Datenübertragungsraten bei gleicher Anzahl von Teilnehmern sinkt. Damit verringert sich auch die Zeitdauer, die ein Teilnehmer maximal auf die Freigabe des Feldbuses für die eigene Übertragung von Daten warten muß.

Aus diesem Grund ist es wünschenswert, mit einer möglichst groβen Datenübertragungsrate zu arbeiten. Dabei ergibt sich jedoch das Problem, daß mit zunehmender Datenübertragungsrate die Qualität der Übertragung zwischen dem Sender und dem am weitesten entfernt liegenden Teilnehmer abnimmt.

Es zeigt sich also, daß der Einstellung der Datenübertragungsrate in einem Feldbussystem zur Steuerung sicherheitkritischer Prozesse eine äußerst wichtige Rolle zukommt. Lösungen zur Einstellung der Datenübertragungsrate in einem Bussystem sind beispielsweise in EP 0 896 449 A2, US 5,124,943 oder US 5,881,240 offenbart.

Aus der EP 0 559 214 A1 ist eine Kommunikationsarchitektur bekannt, die beispielsweise in Bewegungssteuerungssystemen für Robotersysteme eingesetzt wird. Die Kommunikationsarchitektur sieht einen zentralen Steuerungsknoten (CCN) sowie verteilte Steuerungsknoten (DCN) vor. Der zentrale Steuerungsknoten (CCN) steuert die Netzwerkfunktion, wozu beispielsweise auch die Einstellung der Datenübertragungsrate gehört. Die Einstellung der Datenübertragungsrate erfolgt dadurch, daß der CCN-Knoten mit einer niedrigen Default-Datenübertragungsrate einen Befehl über das Netz an die DCNs sendet, um diese zu veranlassen, mit einer höheren Datenübertragungsrate zu arbeiten. Nach Absenden dieses Befehls muß der CCN die neue Datenübertragungsrate jedem Knoten in dem Netzwerk bestätigen. Das heißt mit anderen Worten, daß der CCN an jeden Knoten eine Nachricht sendet, auf dessen Bestätigung er dann wartet.

Aus US 4,853,850 ist ein Netzwerk bekannt, das in einem Fahrzeug eingesetzt werden kann. Die Datenkommunikation in dem Netzwerk kann mit unterschiedlichen Datenübertragungsraten erfolgen, wobei hier vorgeschlagen wird, die Kommunikation mit einer geringen Datenübertragungsrate zu beginnen und später auf eine höhere Datenübertragungsrate umzuschalten.

Beide vorgeschlagenen Techniken zur Einstellung der Datenübertragungsrate genügen jedoch nicht den Anforderungen an ein Bussystem zur Steuerung sicherheitskritischer Prozesse.

Üblicherweise wurde die Datenübertragungsrate in Feldbussystemen manuell eingestellt, indem entsprechend vorgesehene Einstellvorrichtungen an den Teilnehmern des Feldbussystems vorgesehen waren. Es handelte sich bei diesen Einstellvorrichtungen beispielsweise um DIP-Schalter.

Wie sich ohne weiteres ergibt, ist die Einstellung der Datenübertragungsrate auf diese Weise sehr aufwendig und auch fehlerträchtig. So ist es insbesondere bei großen Feldbussystemen mit vielen Teilnehmern nicht unwahrscheinlich, daß die Datenübertragungsrate bei einem Teilnehmer versehentlich falsch eingestellt wird. Dies hat dann zur Folge, daß dieser Teilnehmer nicht über den Feldbus kommunizieren kann. Bei sicherheitskritischen Prozessen könnte dies zu fatalen Folgen führen.

Da die maximal mögliche Datenübertragungsrate mit der Länge der Datenübertragungsstrecke sinkt, ist es bei einer Erweiterung eines bestehenden Feldbussystems häufig notwendig, die Datenübertragungsrate herabzusetzen, so daß auch die am weitesten entfernt angeordneten Teilnehmer noch kommunizieren können. Dies führt jedoch dazu, daß die Datenübertragungsrate an allen Teilnehmern des Feldbussystems herabgesetzt werden muß, da die mit einem Feldbus verbundenen Teilnehmer grundsätzlich mit der gleichen Datenübertragungsrate senden müssen.

Die Aufgabe der vorliegenden Erfindung besteht deshalb darin, das eingangs erwähnte Verfahren zur Einstellung einer Datenübertragungsrate und das eingangs erwähnte Feldbussystem so weiterzubilden, daß eine einfache und flexible Einstellung erzielbar ist, wobei insbesondere die Reaktionszeit des Feldbussystems innerhalb des geforderten Rahmens bleibt. Die Einstellung der Datenübertragungsrate darf insbesondere keinen Einfluß auf die Sicherheit des Feldbussystems haben.

Die der Erfindung zugrunde liegende Aufgabe wird bei einem Verfahren der eingangs genannten Art dadurch gelöst, daß sich der/die Teilnehmer in einer ersten Phase mit einer niederen ersten Datenübertragungsrate bei einer zentralen am Feldbus angeschlossenen Einheit (Zentraleinheit) anmelden, die Zentraleinheit in einer zweiten Phase die Datenübertragungsrate bei dem/den Teilnehmer(n) auf einen vorgegebenen höheren zweiten Wert setzt, sich der/die Teilnehmer in einer dritten Phase mit der höheren Datenübertragungsrate erneut bei der Zentraleinheit anmelden und die Zentraleinheit den Feldbus abschaltet, wenn sie eine Abweichung der Anzahl der in der ersten und der dritten Phase angemeldeten Teilnehmer feststellt.

Unter Teilnehmer ist im Zusammenhang mit der vorliegenden Erfindung jegliche Einheit zu verstehen, die mit dem Feldbus verbunden ist. So werden sowohl Steuerungseinheiten (Clients) als auch Signaleinheiten (Server) als Teilnehmer bezeichnet. Eine Unterscheidung zwischen Steuerungseinheiten und Signaleinheiten ist zur Erläuterung der vorliegenden Erfindung nicht notwendig.

Der Vorteil der vorliegenden Erfindung liegt darin, daß mittels der Zentraleinheit eine Einstellung der Datenübertragungsrate möglich wird, die auch sicherheitskritischen Forderungen entspricht. So wird nach Einschalten des Feldbussystems zunächst geprüft, welche Teilnehmer mit dem Feldbus verbunden sind. Hierzu bedient sich die Zentraleinheit der geringsten Datenübertragungsrate, beispielsweise 20 kBaud. Die geringe Datenübertragungsrate gewährleistet, daß unabhängig von der Datenübertragungsstrecke alle Teilnehmer erreichbar sind. Anschließend sendet die Zentraleinheit ein Telegramm an die verbundenen Teilnehmer, mit dem Befehl, die Datenübertragungsrate auf einen vorgegebenen höheren Wert (Zielwert) zu erhöhen. Dieser Zielwert ist so gewählt, daß alle sicherheitskritischen Parameter, wie beispielsweise Busbelastung, Reaktionszeit etc. erfüllt bleiben. Das Einstellen der Datenübertragungsrate ist damit abgeschlossen.

Das erfindungsgemäße Verfahren läßt mithin eine sehr einfache und flexible Eistellung der Datenübertragungsrate zu, ohne manuelle Eingriffe an den einzelnen Teilnehmern vornehmen zu müssen. Der Anwender kann vielmehr die für das vorhandene Feldbussystem zulässigen (zuvor als sicher ermittelten) Datenübertragungsraten an der Zentraleinheit einstellen.

Ein weiterer Vorteil besteht darin, daß die Sicherheit des Feldbussystems erhöht wird. Sollte nämlich ein in der ersten Phase angemeldeter Teilnehmer keine neue Anmeldung mit der höheren Datenübertragungsrate vornehmen können, beispielsweise weil er zu weit vom Sender entfernt liegt, wird der Feldbus sofort abgeschaltet. Der über das Feldbussystem gesteuerte Prozeß wird in Antwort darauf in einen sicheren Zustand überführt.

In einer bevorzugten Weiterbildung der Erfindung wird die erste Phase mit dem Einschalten des Feldbussystems gestartet.

Diese Maßnahme hat den Vorteil, daß die Datenübertragung mit der niederen ersten Datenübertragungsrate in einem Stadium erfolgt, in dem der zu steuernde sicherheitskritische Prozeß noch nicht läuft, so daß die kurzfristig vorhandene geringe Datenübertragungsrate und die damit verbundene längere Reaktionszeit unkritisch ist.

In einer bevorzugten Weiterbildung sendet die Zentraleinheit in der zweiten Phase an alle Teilnehmer Datentelegramme, die den Befehl zur Umschaltung der Datenübertragungsrate auf den zweiten Wert enthalten. Bevorzugt beendet die Zentraleinheit die dritte Phase, wenn seit der letzten Anmeldung eines Teilnehmers eine vorgegebene Zeitdauer ohne neue Anmeldung eines Teilnehmers vergangen ist.

Diese Maßnahmen haben den Vorteil, daß der Einstellvorgang der Datenübertragungsrate über das Versenden von Datentelegrammen die vorhandenen Sicherheitsmechanismen im Feldbussystem nutzt, so daß die Wahrscheinlichkeit einer fehlerhaften Einstellung einer Datenübertragungsrate sehr gering ist.

Besonders bevorzugt ist als erster Wert der Datenübertragungsrate die Standard-Übertragungsrate, beispielsweise 20 kBaud und als zweiter Wert der Zielwert des Feldbussystems, beispielsweise 250 kBaud. Diese Werte haben sich in der Praxis als besonders vorteilhaft herausgestellt.

In einer bevorzugten Weiterbildung erfaßt ein nach Ablauf der dritten Phase mit dem Feldbus verbundener neuer Teilnehmer die Datenübertragungsrate auf dem Feldbus und meldet sich mit dieser Datenübertragungsrate bei der Zentraleinheit an.

Diese Maßnahme hat den Vorteil, daß das Feldbussystem nicht komplett abgeschaltet werden muß, um einen neuen Teilnehmer anschließen zu können. Sollte es dem Teilnehmer nicht möglich sein, sich bei der Zentraleinheit anzumelden, kann das Feldbussystem neu gestartet werden, um den Vorgang der Einstellung der Datenübertragungsrate neu ablaufen zu lassen, wobei dann ein neuer zweiter Wert verwendet werden kann.

Die der Erfindung zugrunde liegende Aufgabe wird bei einem Feldbussystem der eingangs genannten Art durch die kennzeichnenden Merkmale des Anspruchs 7 gelöst. Erfindungsgemäß ist eine Zentraleinheit vorgesehen, die über den Feldbus mit den Teilnehmern kommuniziert und eine Umschalteinrichtung umfaßt, um die Datenübertragungsrate auf dem Feldbus und bei den Teilnehmern von einem ersten niederen Wert auf einen zweiten höheren Wert umzustellen. Die Zentraleinheit weist eine erste Speichereinheit auf, in der der erste und der zweite Wert der Datenübertragungsrate abgelegt ist. Die Zentraleinheit umfaßt ferner eine zweite und eine dritte Speichereinheit zur Speicherung von Anmeldedaten, wobei die Anmeldedaten von den am Feldbus angeschlossenen Teilnehmern übermittelt werden. Ferner umfaßt die Zentraleinheit eine Vergleichereinrichtung, die die in der zweiten und dritten Speichereinheit gespeicherten Anmeldedaten vergleicht, wobei die Zentraleinheit bei einer Nicht-Übereinstimmung eine Abschaltung des Feldbusses durchführt.

Dieses erfindungsgemäße Feldbussystem ermöglicht durch die nur einmal im System vorhandene Zentraleinheit eine sehr einfache Einstellung der Datenübertragungsrate, die von allen am Feldbus angeschlossenen Teilnehmern übernommen wird. Sofern ein oder mehrere Teilnehmer nicht in der Lage sind, sich mit der von der Umschalteinrichtung vorgegebenen höheren Datenübertragungsrate erneut bei der Zentraleinheit anzumelden, wird das Feldbussystem sofort abgeschaltet. Der durch das Feldbussystem gesteuerte sicherheitskritische Prozeß wird so in einen sicheren Zustand überführt, so daß es durch den nicht oder fehlerhaft übertragenden Teilnehmer nicht zu Schäden kommen kann.

Bevorzugt umfaßt die Zentraleinheit eine Zeitmeßeinrichtung, die mit der Vergleichereinrichtung verbunden ist und den Vergleich nach Ablauf einer vorgegebenen Zeit seit dem Hochsetzen der Datenübertragungsrate initiiert.

Diese Maßnahme hat sich im Hinblick auf die Funktionsweise des Feldbussystems als besonders vorteilhaft herausgestellt.

In einer bevorzugten Weiterbildung ist der Feldbus ein serieller Bus, vorzugsweise ein CAN-Bus.

CAN-Busse werden, wie erwähnt, bereits in großem Umfang eingesetzt, so daß entsprechende Steuerbausteine, beispielsweise Buscontroller, als Standardbausteine zum Aufbau eines erfindungsgemäßen Feldbussystems kostengünstig erhältlich sind.

In einer bevorzugten Weiterbildung weist der Teilnehmer eine Erkennungseinrichtung auf, die die Datenübertragungsrate erfaßt und die Datenübertragungsrate des Teilnehmers in Antwort darauf einstellt.

Diese Maßnahme hat den Vorteil, daß ein Teilnehmer an den Feldbus angeschlossen werden kann, ohne das Feldbussystem neu zu starten. Vielmehr erfaßt der Teilnehmer die Datenübertragungsrate auf dem Feldbus und stellt diese für die eigene Übertragung entsprechend ein. Mit anderen Worten synchronisiert sich der neu angeschlossene Teilnehmer auf den laufenden Feldbus auf, ohne diesen jedoch zu stören. Sobald der Teilnehmer die passende Datenübertragungsrate gefunden hat, meldet er sich bei der Zentraleinheit an.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Zeichnung näher erläutert. Dabei zeigen:
- Fig. 1: ein Blockschaltdiagramm eines erfindungsgemäßen Feldbussystems mit zwei Teilnehmern und einer Zentraleinheit;
- Fig. 2: ein Blockschaltdiagramm einer Einheit der Zentraleinheit; und
- Fig. 3: ein Ablaufdiagramm zur Erläuterung des erfindungsgemäßen Verfahrens.

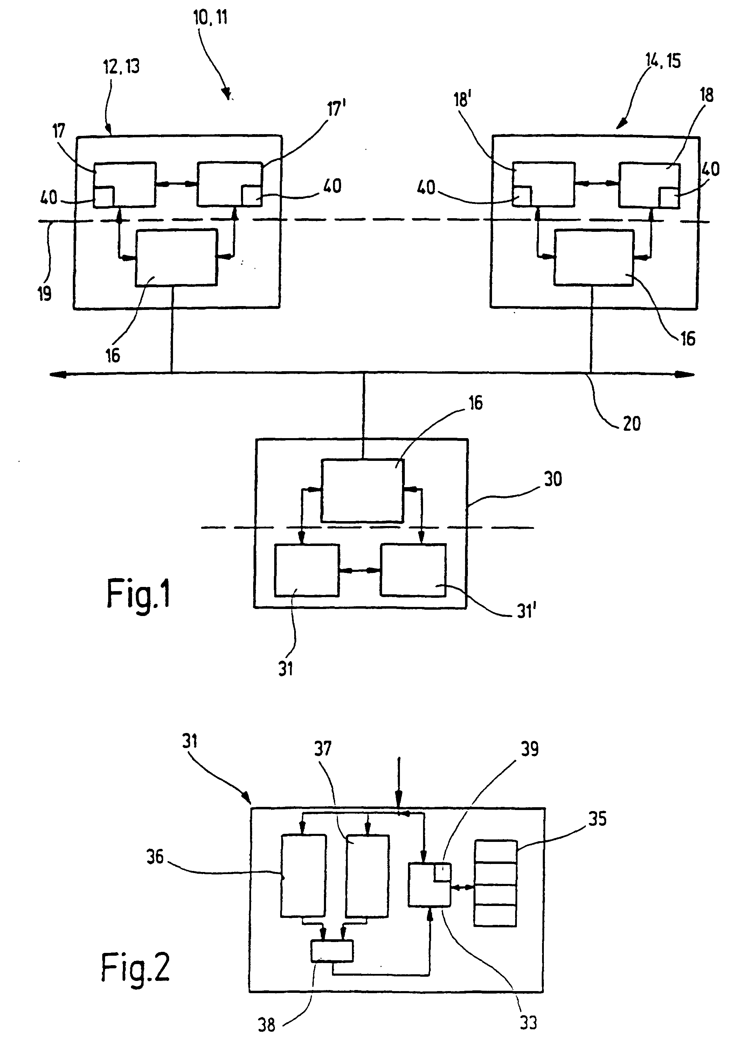

In Fig. 1 ist ein sicheres Feldbussystem mit daran angeschlossenen Busteilnehmern mit der Bezugsziffer 10 gekennzeichnet. Das Feldbussystem 10 ist im vorliegenden Ausführungsbeispiel ein sogenanntes CAN-Feldbussystem 11 (im folgenden kurz Bussystem genannt).

Das Bussystem 11 umfaßt mehrere Busteilnehmer 12, 14, die über einen sogenannten Feldbus 20 (im folgenden auch Bus genannt) elektrisch miteinander verbunden sind. Bei einem CAN-Bussystem besteht dieser Bus aus einer Zweidrahtleitung.

Bei den Busteilnehmern 12, 14 kann es sich um sogenannte Steuereinheiten (auch Client genannt) oder sogenannte Signaleinheiten (auch Server genannt) handeln. Rein beispielhaft sei angenommen, daß der Busteilnehmer 12 eine Steuereinheit 13 und der Busteilnehmer 14 eine Signaleinheit 15 bildet.

Ein solches Bussystem 11 ist beispielsweise dazu geeignet, bestimmte Prozesse zu steuern. Das zur Steuerung notwendige Steuerprogramm läuft dabei in der Steuereinheit 13 ab, die von Signaleinheiten 15 Daten, beispielsweise Meßwerte übermittelt bekommt, diese verarbeitet und entsprechende Steuersignale an Signaleinheiten 15 sendet. Signaleinheiten 15 können beispielsweise mit Sensoren und/oder Aktoren verbunden sein. Grundsätzlich dienen also die Signaleinheiten als Ein/Ausgabe-Einheiten (E/A-Einheiten), während die Steuereinheiten 13 die Verarbeitung der Meßwerte vornehmen und in Antwort darauf die Durchführung definierter Aktionen veranlassen.

Die Kommunikation der Busteilnehmer 12, 14, d.h. die Übertragung der Daten über den Bus 20 erfolgt nach bestimmten Regeln, sogenannten Protokollen. Im vorliegenden Ausführungsbeispiel erfolgt die Datenübertragung entsprechend dem CAN-Protokoll, das bekannt ist und aus diesem Grund nicht weiter beschrieben werden soll.

Jeder Busteilnehmer 12, 14 weist zur Steuerung des über den Bus 20 laufenden Datenverkehrs einen sogenannten Controller-Baustein 16 auf, der die Verbindung zum Bus 20 herstellt und der zu übertragende Nutzdaten in protokollgemäße Datenrahmen verpackt und diese auf den Bus 20 zur Übertragung gibt. Es handelt sich bei diesen Controller-Bausteinen 16 um Standardelemente, die von unterschiedlichen Herstellern angeboten werden. Auf deren Aufbau soll aus diesem Grund nicht weiter eingegangen werden.

Die zu übertragenden Nutzdaten, beispielsweise Meßsignale oder Steuerbefehle, werden von Einheiten 17, 18 geliefert. Diese Einheiten 17, 18 können die unterschiedlichsten Funktionen ausführen und entsprechend unterschiedlich aufgebaut sein. Im vorliegenden Ausführungsbeispiel sei die der Steuereinheit 13 zugeordnete Einheit 17 als Mikrocontroller ausgebildet, der entsprechend definierten Algorithmen Berechnungen durchführt, während die der Signaleinheit 15 zugeordnete Einheit 18 beispielsweise ein A/D-Wandler ist, der von einem Sensor gelieferte Meßsignale in digitale Signale umwandelt.

Die Fig. 1 läßt erkennen, daß die Steuereinheit 13 sowie die Signaleinheit 15 mit weiteren Einheiten 17' und 18' versehen sind. Die beiden zusätzlichen Einheiten 17', 18' sollen die gleichen Funktionen wie die entsprechenden Einheiten 17 bzw. 18 ausführen, um auf diese Weise ein redundantes System zu erreichen. Je nach Anwendungsfall sind die zusätzlichen Einheiten 17', 18' identisch zu den Einheiten 17 bzw. 18 aufgebaut (redundantes System). Je nach Anwendungsfall lassen sich die Einheiten 17, 17' und 18, 18' auch als diversitäre Systeme aufbauen, wobei die jeweils gleiche Funktionalität aufweisenden zusätzlichen Einheiten 17' und 18' gegenüber den anderen Einheiten 17, 18 mit anderen Prozessoren bzw. Prozessoren anderer Hersteller aufgebaut sind.

Diese redundanten oder diversitären Systeme 17, 17' bzw. 18, 18' prüfen sich fortlaufend und melden sofort einen Fehler, wenn Unstimmigkeiten auftreten. Darüber hinaus sorgen sie dafür, daß bei Ausfall einer Einheit 17, 18 der Busteilnehmer 12, 14 insgesamt nicht ausfällt, so daß definiert abgeschaltet werden kann.

Wie sich aus den bekannten CAN-Protokollen ergibt, führen die Controller-Bausteine 16 Fehlerprüfungen durch, um fehlerhafte Datenübertragungen zu erkennen. Ein Beispiel einer Fehlerprüfung ist beispielsweise der sogenannte "Cyclic Redundancy Check" (CRC).

Um ein solches Bussystem auch zur Steuerung sicherheitskritischer Prozesse einsetzen zu können, sind neben der vorgenannten Fehlerüberprüfung durch die Controller-Bausteine 16 weitere Maßnahmen zur Erhöhung der Sicherheit notwendig. Diese zusätzlichen Fehlerprüfungs- und Fehlerkorrektur-Mechanismen sind in den Einheiten 17, 17' und 18, 18' implementiert. So kann es sich beispielsweise um zusätzliche CRC-Berechnungen handeln. Zu den weiteren Aufgaben der Einheiten 17, 17', 18 und 18' gehört beispielsweise auch die Überwachung anderer sicherheitsrelevanter Parameter, beispielsweise einer Reaktionszeit des Busteilnehmers oder auch Timeouts. Da es für das Verständnis der Erfindung nicht erforderlich ist, wird auf eine genauere Beschreibung dieser Mechanismen verzichtet. Die Einheiten 17, 17', 18 und 18' sorgen zusammen mit den Controller-Bausteinen 16 mithin dafür, daß eine nahezu hundertprozentige Fehlersicherheit bzw. ein hoher Fehleraufdeckungsgrad erzielt wird.

In Fig. 1 ist eine Linie 19 gestrichelt dargestellt, die die beiden Busteilnehmer 12, 14 in einen oberen sicheren Teil und einen unteren nicht sicheren Teil trennt. Der nicht-sichere Teil umfaßt die Controller-Bausteine 16 sowie den Bus 20. Der sichere Teil umfaßt die Einheiten 17, 17', 18, 18', die sich selbst und den Datenverkehr über den Bus 20 mit einer sehr kleinen Wahrscheinlichkeit für nicht erkannte Fehler überwachen.

Die Datenübertragung über den Bus 20 erfolgt mit einer bestimmten Geschwindigkeit, der sogenannten Datenübertragungsrate. Um eine Kommunikation der Busteilnehmer 12, 14 zu ermöglichen, muß die von an den Bus angeschlossenen Busteilnehmern verwendete Datenübertragungsrate gleich sein. Eine Datenübertragung mit unterschiedlichen Datenübertragungsraten läßt das CAN-Bussystem 11 nicht zu.

Die Datenübertragungsrate muß bei sicheren Bussystemen so groß gewählt werden, daß die Reaktionszeit der Busteilnehmer einen festgelegten Wert nicht überschreitet. Die erwähnte Reaktionszeit wird insbesondere auch durch die Verfügbarkeit des Bus 20 bestimmt. Hierbei gilt grundsätzlich, daß die Belastung des Busses mit zunehmender Datenübertragungsrate abnimmt. Damit sinkt auch die Zeit, die ein Busteilnehmer 12, 14 warten muß, um über den Bus 20 Daten zu übertragen.

Die maximal einstellbare Datenübertragungsrate wird jedoch begrenzt durch die örtliche Ausdehnung des Busses 20. Mit zunehmender Länge des Busses 20, d.h. mit zunehmendem Abstand der Busteilnehmer 12, 14 zueinander, verringert sich die zulässige, d.h. zuvor als sicher ermittelte Datenübertragungsrate bedingt durch die Eigenschaften der elektrischen Leitungen des Busses 20.

Um eine Einstellung der Datenübertragungsrate auf dem Bus 20 zu erreichen, ist erfindungsgemäß eine Zentraleinheit (auch Management Device genannt) vorgesehen. Diese Zentraleinheit 30 ist mit dem Bus 20 verbunden und kommt nur einmal im Bussystem 11 vor. Sie übernimmt damit die Einstellung der Datenübertragungsraten für alle am Bus 20 angeschlossenen Busteilnehmer 12, 14. Selbstverständlich ist es auch denkbar, daß die Busteilnehmer 12, 14 in Gruppen aufgeteilt sind und über die Zentraleinheit 30 gruppenweise ansprechbar sind.

Wie die Busteilnehmer 12, 14 ist auch die Zentraleinheit 30 in einen nicht sicheren Teil und einen sicheren Teil getrennt. Der nicht sichere Teil umfaßt ebenfalls einen Controller-Baustein 16, der die Verwaltung der Datenübertragung über den Bus 20 übernimmt. Neben diesem Controller-Baustein 16 ist ein redundantes diversitäres system bestehend aus zwei Einheiten 31, 31' vorgesehen. Die beiden Einheiten 31, 31' besitzen die gleiche Funktionalität, die später noch näher erläutert wird.

In Fig. 2 ist der Aufbau der Einheit 31 dargestellt. Die Einheit 31 umfaßt eine Steuerungseinheit 33, die mit einer ersten Speichereinheit 35 verbunden ist. Die Speichereinheit 35 umfaßt mehrere Speicherzellen, um mehrere Daten ablegen zu können.

Die Steuerungseinheit 33 ist ferner mit zwei weiteren Speichereinheiten 36, 37 verbunden, die zur Speicherung von sogenannten Anmeldedaten ausgelegt sind. Die beiden Speichereinheiten 36, 37 sind ihrerseits mit einer Vergleichereinheit 38 verbunden, die ein Ausgangssignal an die Steuerungseinheit 33 liefert. Schließlich ist die Steuerungseinheit 33 noch mit einem sogenannten Timerbaustein 39 versehen.

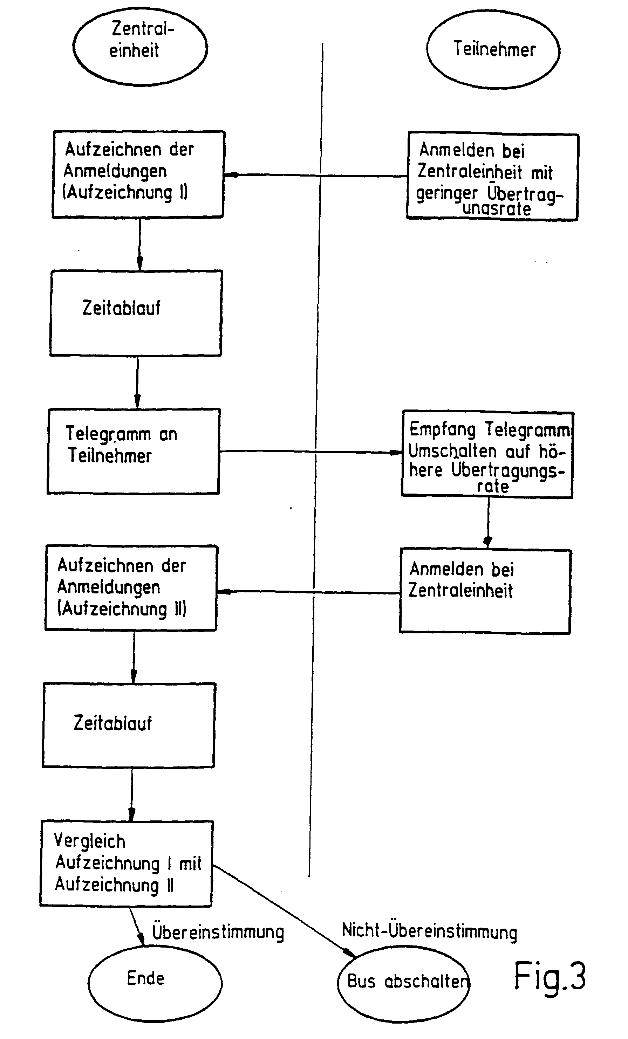

Die Zentraleinheit 30 und insbesondere die Einheit 31 übt nun die folgende Funktion aus, wobei zur Erläuterung auf das Ablaufdiagramm gemäß Fig. 3 Bezug genommen wird.

Beim Start des Bussystems 11, d.h. beim Einschalten aller Busteilnehmer 12, 14, 30 stellen die Controller-Bausteine 16 eine niedere vorgegebene Datenübertragungsrate, vorzugsweise 20 kBaud ein. Dieser niedere Wert (Default-Wert) ist in einer Speicherzelle der Speichereinheit 35 der Zentraleinheit sowie in entsprechenden Speicherzellen (nicht gezeigt) der Busteilnehmer 12, 14 abgelegt. Der gewählte Wert soll gewährleisten, daß sämtliche am Bus 20 angeschlossenen Busteilnehmer 12, 14 - unabhängig von der Ausdehnung des Busses 20 - kommunizieren können. Die elektrischen Eigenschaften der den Bus bildenden Leitungen sollen sich bei dieser geringen Datenübertragungsrate nicht negativ auswirken.

Die Busteilnehmer 12, 14 übertragen mit der niederen Datenübertragungsrate nun in dieser ersten Phase Datentelegramme über den Bus 20, die alle an die Zentraleinheit 30 adressiert sind. Diese Datentelegramme beinhalten Daten, die eine Erkennung bzw. Identifikation des sendenden Busteilnehmers 12, 14 erlauben. Diese sogenannten Anmeldedaten werden von der Zentraleinheit 30 empfangen und in der zweiten Speichereinheit 36 abgelegt. Nach Ablauf einer bestimmten Zeitdauer, die durch den Timerbaustein 39 bestimmt wird und ab dem letzten Abspeichern eines Anmeldedatums gemessen wird, liest die Steuerungseinheit 33 aus der ersten Speichereinheit 35 ein dort vor dem Einschalten des Bussystems abgelegtes Datum aus. Dieses Datum repräsentiert einen Wert einer Datenübertragungsrate, die unter sicherheitsbezogenen Gesichtspunkten der maximal zulässigen Datenübertragungsrate entspricht. Dieses Datum bzw. dieser Wert wird in ein Datentelegramm verpackt und über den Bus 20 an alle Busteilnehmer 12, 14 gesendet.

Die Busteilnehmer 12, 14 empfangen dieses Datentelegramm (beispielsweise ein sogenanntes Broadcast-Telegramm, das an alle Teilnehmer adressiert ist) und verarbeiten die enthaltenen Nutzdaten derart, daß sie die eingestellte Datenübertragungsrate auf den neuen Wert umstellen. Das vorgenannte Datentelegramm wird von der Zentraleinheit 30 noch mit der niederen Datenübertragungsrate gesendet.

Nach Empfang des Datentelegramms und dem Umsetzen der Datenübertragungsrate auf den größeren Wert, vorzugsweise 200 - 250 kBaud melden sich die Busteilnehmer 12, 14 erneut bei der Zentraleinheit 30 an. Hierfür senden sie mit der höheren Datenübertragungsrate an die Zentraleinheit 30 adressierte Datentelegramme, die die Anmeldedaten enthalten. Diese Anmeldedaten werden in der dritten Speichereinheit 37 abgelegt.

Sobald eine durch den Timerbaustein 39 erfaßte Zeitdauer seit dem Eintreffen des letzten Datentelegramms einen bestimmten Wert überschreitet, gibt die Steuerungseinheit 33 den Befehl an die Vergleichereinheit 38 die in den beiden Speichereinheiten 36, 37 abgelegten Anmeldedaten miteinander zu vergleichen. Stellt sich dabei heraus, daß sich nach dem Hochsetzen der Datenübertragungsrate bestimmte Busteilnehmer nicht erneut angemeldet haben, schließt die Steuerungseinheit 33 auf einen Fehler und schaltet das Bussystem sofort ab, so daß die gesteuerten sicherheitskritischen Prozesse in einen sicheren Zustand überführt werden.

Ein möglicher Fehler könnte beispielsweise darin bestehen, daß ein Busteilnehmer für die eingestellte höhere Datenübertragungsrate zu weit entfernt von der Zentraleinheit 30 liegt. Um diesen Fehler zu beheben, ist es notwendig, das Bussystem mit einer geringeren Datenübertragungsrate zu fahren. Ein solcher geringerer Wert ist in einer weiteren der Speicherzellen der Speichereinheit 35 abgelegt.

Beim nächsten Neustart des Bussystems 11, der durch das zuvor erläuterte fehlerbedingte Abschalten notwendig wird, wird nun das vorgenannte Verfahren zur Einstellung der Datenübertragungsrate erneut durchgeführt, wobei allerdings als Wert für die Datenübertragungsrate der nächste kleinere Wert aus der Speichereinheit 35 ausgelesen wird. Selbstverständlich ist es auch denkbar, diesen kleineren Wert vor dem Neustart manuell an der Zentraleinheit 30 einzugeben und nicht auf abgelegte Werte zurückzugreifen.

Wird bei dem oben erwähnten Vergleich der in den beiden Speichereinheiten 36, 37 abgelegten Anmeldedaten eine Übereinstimmung festgestellt, so kann das Bussystem 11 mit der eingestellten Datenübertragungsrate arbeiten. Alle Teilnehmer sind in der Lage, mit dieser Datenübertragungsrate zu kommunizieren.

Um die Sicherheit des Bussystems zu erhöhen, wird durch die Zentraleinheit 30 zyklisch geprüft, ob alle anfangs registrierten Teilnehmer noch vorhanden, d.h. sende- und empfangsbereit sind. Diese Überprüfung wird dadurch durchgeführt, daß die Zentraleinheit 30 ein Datentelegramm über den Bus 20 verschickt, das das Kommando für die Busteilnehmer 12, 14 enthält, Anmeldedaten zurückzusenden. Diese Anmeldedaten werden wiederum in der dritten Speichereinheit 37 abgelegt und nach Ablauf einer durch den Timerbaustein 39 vorgegebenen Zeitdauer mit den anfangs erfaßten Anmeldedaten verglichen. Eine Nicht-Übereinstimmung der Anmeldedaten führt zum sofortigen Abschalten des Bussystems 11, während eine Übereinstimmung der Daten keine weiteren Aktionen nach sich zieht.

Für den Fall, daß Busteilnehmer 12, 14 während des Betriebs des Bussystems 11 mit der hohen Datenübertragungsrate angeschlossen werden sollen, weisen die Einheiten 17, 17', 18 und 18' eine Datenübertragungsraten-Erkennungseinheit 40 auf. Diese Erkennungseinheiten 40 dienen dazu, die auf dem Bus 20 vorhandene Datenübertragungsrate zu erkennen und den Controller-Baustein 16 entsprechend einzustellen. Danach sendet der neue Busteilnehmer 12, 14 ein Datentelegramm an die Zentraleinheit 30, um sich dort anzumelden. Die entsprechenden Anmeldedaten werden in diesem Fall in der zweiten Speichereinheit 36 abgelegt. Bei der nächsten zyklischen Überprüfung, ob alle Busteilnehmer sende- und empfangsbereit sind, werden dann die Anmeldedaten des neu angeschlossenen Busteilnehmers in der dritten Speichereinheit 37 abgelegt, so daß der Vergleich zu einer Übereinstimmung führen kann.

Wie bereits erwähnt, umfaßt die erste Speichereinheit 35 eine Vielzahl von Speicherzellen, die unterschiedliche Werte für Datenübertragungsraten aufnehmen können. Diese Datenübertragungsraten lassen sich vor Inbetriebnahme der Zentraleinheit 30 eingeben. Selbstverständlich ist es auch denkbar, diese Daten während des Betriebs zu verändern. Typische Werte für abgespeicherte Datenübertragungsraten sind 20 kBaud als Standard-Startwert, 50 kBaud, 100 kBaud, 125 kBaud, 150 kBaud, 200 kBaud, 250 kBaud und 500 KBaud. Selbstverständlich sind auch andere Abstufungen denkbar.

Es zeigt sich nach alledem, daß das erfindungsgemäße Feldbussystem eine sehr einfache Einstellung definierter sicherer Datenübertragungsraten für alle Busteilnehmer ermöglicht. Die manuelle Einstellung der Busteilnehmer entfällt somit. Darüber hinaus werden auch während der Einstellung einer Datenübertragungsrate alle für die Sicherheit wichtigen Werte, wie Reaktionszeiten, Übertragungsfehler, Timeouts, etc. sicherheitsrelevant überwacht. Veränderungen der Leistungsdaten des Bussystems haben deswegen keinen Einfluß.

Es versteht sich, daß die Funktionalität der Zentraleinheit 30 mit der Funktionalität anderer Busteilnehmer kombiniert werden kann, ohne den Rahmen der Erfindung zu verlassen. Es ist denkbar, die Zentraleinheit 30 in eine Steuereinheit 13 zu integrieren. Darüber hinaus ist es durchaus möglich, die Einheit 31 in einer anderen als in Fig. 2 gezeigten Weise aufzubauen, um die gleich Funktionalität zu erzielen.

## Patentansprüche

1. Verfahren zur Einstellung einer Datenübertragungsrate in einem Feldbussystem (10), das zur Steuerung sicherheitskritischer Prozesse geeignet ist und das zumindest einen an einen Feldbus (20) angeschlossenen Teilnehmer (12,14) umfaßt, wobei sich der/die Teilnehmer in einer ersten Phase mit einer niederen ersten Datenübertragungsrate bei einer zentralen am Feldbus angeschlossenen Einheit (30), Zentraleinheit, anmelden; die Zentraleinheit (30) in einer zweiten Phase die Datenübertragungsrate bei dem/den Teilnehmer(n) (12,14) auf einen vorgegebenen höheren zweiten Wert setzt; sich der/die Teilnehmer (12, 14) in einer dritten Phase mit der höheren Datenübertragungsrate erneut bei der Zentraleinheit anmelden; und die Zentraleinheit (30) den Feldbus (20) abschaltet, wenn sie eine Abweichung der Anzahl der in der ersten und der dritten Phase angemeldeten Teilnehmer (12,14) feststellt.

2. Verfahren nach Anspruch 1, **dadurch gekennzeichnet, daß** die erste Phase mit dem Einschalten des Feldbussystems (10) gestartet wird.

3. Verfahren nach Anspruch 1, oder 2, **dadurch gekennzeichnet, daß** die Zentraleinheit (30) in der zweiten Phase an alle Teilnehmer (12,14) Datentelegramme sendet, die den Befehl zur Umschaltung der Datenübertragungsrate auf den zweiten Wert enthalten.

4. Verfahren nach einem der vorhergehenden Ansprüche, **dadurch gekennzeichnet, daß** die Zentraleinheit (30) die dritte Phase beendet, wenn seit der letzten Anmeldung eines Teilnehmers (12, 14) eine vorgegebene Zeitdauer ohne neue Anmeldung eines Teilnehmers vergangen ist.

5. Verfahren nach einem der vorhergehenden Ansprüche, **dadurch gekennzeichnet, daß** der erste Wert der Datenübertragungsrate der Standard-Übertragungsrate und der zweite Wert dem Zielwert des Feldbussystems entspricht.

6. Verfahren nach einem der vorhergehenden Ansprüche, **dadurch gekennzeichnet, daß** ein nach Ablauf der dritten Phase mit dem Feldbus (20) verbundener neuer Teilnehmer (12, 14) die Datenübertragungsrate auf dem Feldbus (20) erfaßt und sich mit dieser Datenübertragungsrate bei der Zentraleinheit (30) anmeldet.

7. Feldbussystem zur Steuerung sicherheitskritischer Prozesse, mit einem Feldbus (20), an dem zumindest ein Teilnehmer (12, 14) angeschlossen ist, mit einer an den Feldbus angeschlossenen Zentraleinheit (30), die eine Umschalteinrichtung (33) zum zentralen Umschalten der Datenübertragungsrate auf dem Feldbus und bei den Teilnehmern von einem ersten niederen Wert auf einen zweiten höheren Wert umfaßt, **dadurch gekennzeichnet, daß** die Zentraleinheit aufweist:
eine erste Speichereinheit (35), in der der erste und der zweite Wert der Datenübertragungsrate abgelegt sind,
eine zweite und eine dritte Speichereinheit (36, 37) zur Speicherung von von den Teilnehmern (12, 14) gelieferten Anmeldedaten,
eine Vergleichereinrichtung (38) zum Vergleichen der in der zweiten und der dritten Speichereinheit (36, 37) gespeicherten Anmeldedaten und
ein Mittel zur Abschaltung des Feldbusses (20) bei einer Nicht-übereinstimmung.

8. Feldbussystem nach Anspruch 7, **dadurch gekennzeichnet, daß** die Zentraleinheit (30) eine mit der Vergleichereinrichtung (38) verbundene Zeitmesseinrichtung (39) zur Initiierung des Vergleichs nach Ablauf einer vorgegebenen Zeit seit dem Hochsetzen der Datenübertragungsrate umfaßt.

9. Feldbussystem nach einem der Ansprüche 7 oder 8, **dadurch gekennzeichnet, daß** der Feldbus (20) ein serieller Bus ist.

10. Feldbussystem nach einem der Ansprüche 7 bis 9, **dadurch gekennzeichnet, daß** der Feldbus (20) ein CAN-Bus (11) ist.

11. Feldbussystem nach einem der Ansprüche 7 bis 10, **dadurch gekennzeichnet, daß** der Teilnehmer (12, 14) eine Erkennungseinrichtung (40) zur Erfassung der Datenübertragungsrate auf dem Feldbus und zur Einstellung der Datenübertragungsrate des Teilnehmers (12, 14) in Antwort darauf aufweist.

## Claims

1. Method for adjusting the data transmission rate in a fieldbus system (10) which is suitable to control safety-critical processes and which comprises at least one subscriber (12, 14) connected to a fieldbus (20), wherein in a first phase the subscriber/subscribers log on at a unit (30), central unit, centrally connected to the fieldbus with a first low data transmission rate; in a second phase the central unit (30) sets the data transmission rate at the subscriber/subscribers (12, 14) to a predetermined higher second value; in a third phase the subscriber/subscribers (12, 14) log on again at the central unit with a higher data transmission rate; and the central unit (30) shuts down the fieldbus (20) if it detects a deviation of the number of subscribers (12, 14) logged on in the first and the third phase.

2. Method according to claim 1, **characterized in that** the first phase is started with switching on the fieldbus system (10).

3. Method according to claim 1 or 2, **characterized in that** in the second phase the central unit (30) transmits data telegrams to all subscribers (12, 14), the data telegrams comprising the instruction to switch the data transmission rate to the second value.

4. Method according any of the preceding claims, **characterized in that** the central unit (30) terminates the third phase when a predetermined time period has lapsed since the last log-on of one of the subscribers (12, 14) without a new log-on of one of the subscribers.

5. Method according to any of the preceding claims, **characterized in that** the first value of the data transmission rate is a standard transmission rate and the second value corresponds to the target value of the fieldbus system.

6. Method according any of the preceding claims, **characterized in that** a new subscriber (12, 14) being connected to the fieldbus after termination of the third phase detects the data transmission rate on the fieldbus (20) and logs on at the central unit (30) with this data transmission rate.

7. Fieldbus system for controlling safety-critical processes, comprising a fieldbus (20) to which at least one subscriber (12, 14) is connected, a central unit (30) coupled with the fieldbus and having a switching device (33) for centrally switching the data transmission rate on the fieldbus and at the subscribers from a first low value to a second higher value **characterized in that** the central unit comprises:
a first memory unit (35) which stores the first and second values of the data transmission rate;
a second and a third memory unit (36, 37) for storing log-on data being supplied by the subscribers (12, 14);
a comparator device (38) which compares the log-on data stored in the second and the third memory unit, and
a means for performing a shut-down of the fieldbus in case of an inconsistency.

8. Fieldbus system according to claim 7, **characterized in that** the central unit (30) comprises a time measuring device (39) connected to the comparator device (38) and for initiating the comparison after the lapse of a predetermined time period since the data transmission rate has been set to a higher value.

9. Fieldbus system according to claim 7 or 8, **characterized in that** the fieldbus (20) is a serial bus.

10. Fieldbus system according to claim 7 or 8, **characterized in that** the fieldbus (20) is a CAN-bus (11).

11. Fieldbus system according to any of claims 7 to 10, **characterized in that** the subscriber (12, 14) comprises a detection device (40) for detecting the data transmission rate on the fieldbus and for adjusting the data transmission rate of the subscriber (12, 14) in response thereto.

## Revendications

1. Procédé pour le réglage d'une vitesse de transmission de données dans un système à bus de terrain (10), qui convient pour commander des processus de sécurité et qui comprend au moins un participant (12, 14) raccordé à un bus de terrain (20), dans lequel le/les participant(s) se déclare(nt) dans une première phase avec une première vitesse de transmission de données faible auprès d'une unité centrale (30) raccordée au bus de terrain, l'unité centrale (30) règle dans une deuxième phase la vitesse de transmission de données à une deuxième valeur supérieure prédéterminée pour le/les participant(s) (12, 14), le/les participent(s) (12, 14) se déclare(nt) de nouveau dans une troisième phase auprès de l'unité centrale avec la vitesse de transmission de données augmentée, et l'unité centrale (30) arrête le bus de terrain (20) quand elle constate un écart entre le nombre des participants (12, 14) déclarés lors de la première et de la troisième phase.

2. Procédé selon la revendication 1, **caractérisé en ce que** la première phase est démarrée après la mise en route du système à bus de terrain (10).

3. Procédé selon la revendication 1 ou 2, **caractérisé en ce que**, dans la deuxième phase, l'unité centrale (30) envoie à tous les participants (12, 14) des télégrammes de données qui contiennent l'ordre de passage de la vitesse de transmission de données à la deuxième valeur.

4. Procédé selon l'une des revendications précédentes, **caractérisé en ce que** l'unité centrale (30) termine la troisième phase quand, depuis la première déclaration d'un participant (12, 14), une période prédéterminée s'est écoulée sans nouvelle déclaration d'un participant.

5. Procédé selon l'une des revendications précédentes, **caractérisé en ce que** la première valeur de la vitesse de transmission de données correspond à la vitesse de transmission standard et la deuxième valeur à la valeur visée du système à bus de terrain.

6. Procédé selon l'une des revendications précédentes, **caractérisé en ce qu'**un nouveau participant (12, 14) relié au bus de terrain (20) après la fin de la troisième phase détecte la vitesse de transmission de données sur le bus de terrain (20) et se déclare auprès de l'unité centrale (30) avec cette vitesse de transmission de données.

7. Système à bus de terrain pour la commande de processus de sécurité, avec un bus de terrain (20) sur lequel est raccordé au moins un participant (12, 14), avec une unité centrale (30) raccordée au bus de terrain qui comprend un dispositif de commutation (33) pour commuter de manière centralisée la vitesse de transmission de données sur le bus de terrain et chez les participants d'une première valeur faible à une deuxième valeur plus élevée, **caractérisé en ce que** l'unité centrale présente :
une première unité de mémoire (35) dans laquelle sont enregistrées la première et la deuxième valeurs de la vitesse de transmission de données,
une deuxième et une troisième unité de mémoire (36, 37) pour mémoriser des données de déclaration fournies par les participants (12, 14),
un dispositif comparateur (38) pour comparer les données de déclaration mémorisées dans la deuxième et la troisième unités de mémoire (36, 37), et
un moyen pour arrêter le bus de terrain (20) en cas de non-concordance.

8. Système à bus de terrain selon la revendication 7, **caractérisé en ce que** l'unité centrale (30) comprend un dispositif de mesure de temps (39) relié au dispositif comparateur (38) pour initier la comparaison au terme d'une durée prédéterminée depuis l'augmentation de la vitesse de transmission de données.

9. Système à bus de terrain selon l'une des revendications 7 ou 8, **caractérisé en ce que** le bus de terrain (20) est un bus série.

10. Système à bus de terrain selon l'une des revendications 7 à 9, **caractérisé en ce que** le bus de terrain (20) est un bus CAN (11).

11. Système à bus de terrain selon l'une des revendications 7 à 10, **caractérisé en ce que** le participant (12, 14) présente un dispositif de reconnaissance (40) pour relever la vitesse de transmission de données sur le bus de terrain et pour régler en réponse la vitesse de transmission de données du participant (12, 14).
